# EUROPEAN PATENT APPLICATION

(11) **EP 3 656 683 A1**
(43) Date of publication of application: **27.05.2020**
(21) Application number: 18382840.9
(22) Date of filing: 22.11.2018
(51) Int. Cl.: B64F 1/36, G07B 15/04

(54) **A SYSTEM AND METHOD FOR CONTROLLING PASSENGERS AND LUGGAGE BEFORE BOARDING**

(71) Applicant: International Boarding Solutions S.L., 29013 Malaga (ES)
(72) Inventor: Cámara Palacios, José Luís, 29013 Málaga (ES); Báez López, Manuel Antonio, 29013 Málaga (ES); Hernández Talavera, Gilberto, 29013 Málaga (ES)
(74) Representative: Carvajal y Urquijo, Isabel

(57) **Abstract**

A system and method for controlling passengers and luggage before boarding. The system comprises:
- Passenger and luggage control devices (12) with a receptacle (20) with a sensor (23, 23', 23", 25, 26) for capturing luggage parameters to determine, by a classifier, a luggage category;
- Payment terminals (13) where the passenger, if the comparison between the luggage category and a luggage condition leads to a pending payment, can fulfill the pending payment.
- Access management system (14) to allow or deny the passenger entrance to areas (4, 5, 6) based on the comparison between the luggage category and a luggage condition and, if said comparison leads to a pending payment, based on the fulfillment of the pending payment.
- A central computing platform (11) connected to the passenger and luggage control devices (12), the payment terminals (13) and the access management system (14), and configured to centralize information related to passenger and luggage control.

## Description

### FIELD OF THE INVENTION

The present invention relates generally to passenger transportation industry where the passenger carries luggage and both passenger and luggage must be controlled. More particularly, the invention refers to methods and systems providing passengers and baggage control before boarding an aircraft, a train, a bus or any other public transport vehicle where such control is required.

The system and method of the present invention integrates a complete passenger and luggage management in an airport scenario.

### BACKGROUND

The airport sector is well known for being a highly competitive sector, where each airline must compete to gain its market position. Therefore, in order to increase profitability, major efforts are focused on optimizing their internal operational processes and the use of the outsourced infrastructures. By these means, most of them are focused on reducing the turn-around (i.e. the amount of time the aircraft spends on the ground), since airlines do not generate any revenue during this amount of time. Moreover, the larger this period of time is, the higher airport fees must be faced.

The aircraft turn-around time, known as the period of time between the aircraft arrival to the gate platform and the wedges placement, and the removal of these wedges and the aircraft departure, ranges from 30-60 minutes. The most crucial component, which causes most of the delays, is the passengers control of personal items before boarding. Previous studies show that the cost reduction related to boarding process time optimization is about 30$/minute. One minute reduction on this boarding process for each flight would mean total annual savings of 5.475.000 $ for an airline operating 500 flights per day. Hence, one of the main targets of an airline is to reduce the turn-around time as much as possible.

Therefore, speed, accuracy and efficiency are essential in order to minimize the total turn-around time. This time is related to several variables such as aircraft size, airport infrastructure, ground-handling services, luggage carried by passengers and passengers behavior. Besides, the luggage control is also included in the passengers boarding process. The airlines policies are constantly changing to adapt to the passenger behavior and are facing important challenges to manage and differentiate the passenger luggage and elaborate different fares according to this specific passenger situations. There are systems, such as the one described on patent document ES2461940-A1, that measure both weight and dimensions of the passenger luggage, and then compare these measurements against the precise airline weight and size limits. Nevertheless, experiments carried out in real airport environments conclude that a strict dimensional or weight control is not practical at all, since the heterogeneity of both passenger behaviors and hand luggage shapes, aspects, densities and deformities reveal non-practical results for this accurate control.

The present invention provides a technical solution that allows the integral management of the passengers boarding process. This concerns an efficient and practical luggage control, in order to automatically perform all the tasks that are currently manually performed by the handling agents.

### SUMMARY OF THE INVENTION

The present invention solves the above-mentioned problem, by using an automatized and computerized system that allows passenger transportation companies (particularly, airlines) the satisfaction of their luggage-related rules, checking that the passenger satisfies the requirements about it, and at the same time, providing a faster and safer boarding process.

The global boarding process control system herein described incorporates several functions with a flexible set up, so it can be adapted to the specific requirements of every company who offers the passenger transport services. This allows the companies to optimize/minimize their per passenger boarding time ensuring that, when it comes to luggage, the minimum requirements are properly satisfied. The system also integrates the process communication with both companies information systems and payment systems, allowing the companies to charge the passengers with any service-derived fee. In addition, the system offers the possibility of keeping the passenger informed in every moment in several ways, such as visual interfaces, sound alerts, etc. It also emits a ticket that can be used as a receipt indicating that the luggage is compliant with the company requirements or as a receipt for the payment that has been carried out by the passenger in the same device this control process is performed. The main interest in this passenger and luggage control system resides in the particularities and singularities of luggage analysis which go further away the plain strict volume (dimensions and weight) control that can be performed by the measuring devices cited in the state of the art.

The system proposed in the present document, performs a centralized control of both passenger and luggage features that allows to define, for each passenger record, a series of conditions that gives it access to the several airport areas that the airline or the current airport entity wants to provide or control. This means, for example, if a passenger only can board in case it has paid its luggage associated fee in the payment point provided by this global automatic control system, the passenger access to the airplane will not be permitted until the system has validated this payment and only in this moment the passenger is allowed to access the boarding gates using its boarding pass.

So, the system described here will make its decisions based on:
- The luggage features that allow it to be sorted in one or another category.
- The particular luggage requirements for each transportation company.

While the solutions described in the state of the art are limited to a luggage control based exclusively on luggage weight and size measuring, the present invention is able to classify luggage in N levels or categories attending to a series of features that is not limited to just dimension and weight measuring but more features to be analyzed (e.g. type of luggage).

For making this possible, the system implements a decision tree for classifying each generic luggage category, instead of only determining whether a specific luggage exceeds some specific weight or size to allow its boarding. The present invention uses computer vision-based classifiers for analyzing luggage dimension profile and uses it to make different decisions. It is also very useful in false-negative detection.

As described before, in the context of this invention, a classifier is a set of computer vision-based algorithms that are able to differentiate the category of one specific object (with a percentage of accuracy), assisted by training and machine-learning processes. Objects that are controlled by the system can be any type of luggage carried by the passenger, such as suitcase, trolley, sports bag, briefcase, computer, laptop, wallet, backpack, box, sports equipment, wheelchair, clothes, clutch bag, documents or any object that can be carried into a plane.

In an example of invention embodiment, the system is using a Bayesian Classifier that allows to know, based on a random luggage picture, whether a piece of luggage is a trolley, a backpack, a bag, etc. making the appropriate decisions based on the category of the luggage that is been analyzed.

The invention is referred to a passenger and luggage control system that implies the following means:
- At least one passenger and luggage control device.
- One or more payment points for passenger use.
- One management subsystem for one or more accesses that enables/disables passenger access to one or more specific zones provided by the transportation company (i.e. airport boarding zones).
- A computer central platform connected to the access management subsystem, payment points and the passengers and luggage control device.

In the proposed system, each control device, placed in a control point that is accessed by the passenger carrying its luggage, consists in a receptacle to place and analyze this luggage. To do that, the receptacle has at least one sensor to get the value of at least one parameter of the luggage. That reading will be used to determine the luggage. Also, the control device will have a configurable classifier which is implemented in its software and that will determine the luggage category. This category will be compared with one or more conditions or requirements defined by the passenger and luggage transportation company.

Based on this comparison results and, if that result indicates that there is a pending payment, once the passenger accomplishes the payment in one of the provided payment points, the access management subsystem is activated to enable or not the passenger access to the corresponding areas.

The central computing platform of the system is in charge of managing all the information related to passengers and luggage control, indicating which access area has to be enabled for each passenger. In an embodiment, the central computing platform holds those data because is connected through the network to the airline Departure Control System (DCS), a central computing platform of the airline. And to accelerate the data managing process, including those received from the control device, the payment points and the access managing subsystem, the information is uploaded using a series of asynchronous threads opened by each of the control devices.

In accordance with one aspect of the present invention there is provided a system for controlling passengers and luggage before boarding, the system comprising:
- At least one passenger and luggage control device with processing means, positioned at a control point accessible by at least one passenger, comprising means for identifying a passenger and a receptacle configured to receive and analyze a piece of luggage of the passenger, the receptacle comprising at least one sensor for capturing at least one luggage parameter used for determining a luggage category. The luggage category is determined by a classifier that runs in the processing means and is compared to at least one luggage condition which may comprise a luggage type condition (such as hand luggage or accessory; or if the piece of luggage is a suitcase, trolley, sports bag, briefcase, laptop, etc.). The luggage condition may comprise any of the following conditions: one or more dimensional conditions, one or more weight conditions, one or more weight/volume ratio conditions, one or more color conditions, or a combination thereof. The classifier is preferably based on neural networks, where the input is the at least one luggage parameter and the output is the luggage category.
- At least one payment terminal where the passenger, if the comparison between the luggage category and the at least one luggage condition leads to a pending payment, can fulfill the pending payment;
- An access management system configured to allow or deny the passenger entrance to at least one area based on the comparison between the luggage category and the at least one luggage condition and, if said comparison leads to a pending payment, based on the fulfillment of the pending payment.
- A central computing platform connected to the at least one passenger and luggage control device, the at least one payment terminal and the access management system, and configured to centralize information related to passenger and luggage control.

In an embodiment, the sensor of the receptacle comprises a 3D vision system configured to build a 3D-reconstruction of the at least one piece of luggage. Alternatively, or in addition to, the sensor of the receptacle may comprise a camera.

The processing means of the passenger and luggage control device is preferably configured to open a plurality of asynchronous work threads to send data and information regarding passenger and luggage control to the central computing platform.

According to an embodiment, the means for identifying a passenger comprises at least one scanner for scanning a passenger document to identify a passenger, such as a boarding pass scanner and/or an identity card scanner.

In an embodiment, the receptacle has an inclined base in relation to a horizontal plane, and comprises at least one weight sensor. The passenger and luggage control device is preferably configured to activate printing of a luggage tag based on the luggage category, the system further comprising at least one printer configured to print the luggage tag once activated.

The system may further comprise a drop-off point prepared to receive the tagged piece of luggage for its delivery to the airplane hold. The central computing platform may be connected to at least one airline Departure Control System (DCS). The luggage category determined by the classifier of each passenger and luggage control device may comprise hand-luggage and/or accessory.

In an embodiment, the central computing platform is configured to monitor, for each flight, an accumulated total volume of the hand-luggage and/or accessory accepted in cabin of the corresponding flight by the at least one passenger and luggage control device; compare said accumulated total volume with a maximum allowable volume in cabin for the corresponding flight; if the accumulated total volume exceeds the maximum allowable volume in cabin, send an instruction to the at least one passenger and luggage control device to classify each further piece of luggage to be delivered to a drop-off point.

In accordance with a further aspect of the present invention there is provided a method of controlling passengers and luggage before boarding. The method comprises the necessary steps executed by the corresponding system; in particular, the method comprises the following steps:
- Identifying a passenger at a control point, for instance by scanning a passenger document (such as a boarding pass or an identity card).
- Placing, in a receptacle positioned at the control point, at least one piece of luggage of the passenger.
- Analyzing each piece of luggage using at least one sensor to capture at least one luggage parameter for each piece of luggage.
- Determining, by a classifier using the at least one luggage parameter as input, a luggage category for each piece of luggage.
- Comparing the luggage category to at least one luggage condition.
- Determining if a pending payment is due based on the comparison between the luggage category and the at least one luggage condition, and in that case fulfilling, by the passenger, the pending payment at a payment terminal.
- Controlling automatic barriers to allow or deny the passenger entrance to at least one area based on the comparison between the luggage category and the at least one luggage condition and, if said comparison leads to a pending payment, based on the fulfillment of the pending payment.

The main benefits of the present invention are:
- It provides a global system that improves the efficiency of the passengers and luggage control during boarding process, by making it faster. This means notable savings for the airlines.
- It allows to control a wide range of pieces of luggage in an effective way.
- When it comes to installation, the system is adaptable and configurable for both airport common areas and airport boarding areas. This way, the system can integrate a double interface depending whether it is going to be used as a plain luggage classifier, without any additional functionality, or it is going to be used by the airline staff to perform all the boarding process. In this case, the interface will show passengers and luggage detailed information in a similar way the DCSs do.
- The global passengers and luggage control management system can be installed at different locations around the airport (check-in area, before the security check-in point or at the boarding gate) to automatically perform every process that, as mentioned in the state of the art, is manually done by the airline handling agents at the moment the passengers are ready to board after having passed the security control (boarding pass analysis, identity check, luggage analysis, automatic bag tag generation for hand luggage that does not comply with the airline cabin requirements, passenger temperature check, luggage picture taking, etc.), and for that reason is in this place where could be more beneficial. All those functionalities are integrated in one single system.
- Specifically, the luggage control herein presented is based in the verification of a series of particular features for each luggage category which can be modified and adapted by and for each airline. The size control does not have to be neither exact nor accurate, but adaptable based in a series of filters, routines and decisions that make possible to get to a useful and practical response for the airline attending to the features of each luggage category the airline has decided to implement. Those filters and routines are developed to support the multiple and heterogeneous situations that have to be faced when trying to verify a piece of luggage in a real scenario.
- The system allows to integrate, through the use of NFC RFID technology and beacons, solutions to ease the passenger's experience in the terminals and the boarding process. For example, a scanner can be placed at the airport entrance in the passenger reception point, in a way that when a passenger comes near, they can load their travel information. From that point, as they are moving around the airport, the passenger can receive in its mobile phone discount offers in duty free airport shops, cafeterias, restaurants and other offers related to the application environment.
- Hand luggage is associated to a particular passenger and flight, so that security is increased in airports.
- The flow of passengers in the security area is improved.

### BRIEF DESCRIPTION OF THE DRAWINGS

The accompanying drawings illustrate aspects of the present invention. In such drawings:
FIGURE 1 illustrates a blocks diagram of the system architecture for the integral passengers and luggage control, in accordance with at least one embodiment.
FIGURE 2 illustrates a schematic representation of an exemplary receptacle for luggage control, in accordance with at least one embodiment.
FIGURE 3 illustrates the base of the receptacle for luggage control, tilted in one direction, in accordance with at least one embodiment.
FIGURE 4 illustrates the base of the receptacle for luggage control, tilted in other direction, in accordance with at least one embodiment.
FIGURE 5 illustrates a schematic view of an exemplary luggage control sensor placement and operation, in accordance with at least one embodiment.
FIGURE 6 illustrates an exemplary sensor arrangement in the receptacle for capturing parameters of the luggage, in accordance with at least one embodiment.
FIGURE 7 illustrates other exemplary sensor arrangement in the receptacle, in accordance with at least one embodiment.
FIGURE 8 illustrates another exemplary sensor arrangement in the receptacle, in accordance with at least one embodiment.
FIGURE 9 illustrates a space volume monitored by a 3D vision system referenced by a Cartesian coordinate system on an inclined plane.
FIGURE 10 illustrates a schematic view of three exemplary luggage comparisons against a dimensional condition, in accordance with at least one embodiment.
FIGURE 11 illustrates a exemplary schematic system scenario for integral passenger and luggage control, in accordance with at least one embodiment.
FIGURE 12 illustrates a schematic view of the luggage control system, including the receptacle for placing the hand object and passenger's identity and boarding pass readers, in accordance with at least one embodiment.
FIGURE 13 illustrates a schematic diagram of asynchronous data handling for the integral passenger and luggage control, in accordance with at least one embodiment.

### DETAILED DESCRIPTION

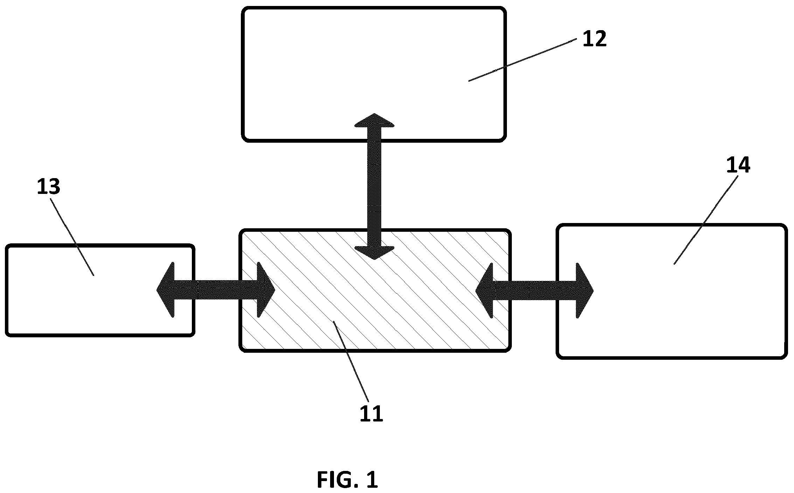

In a possible embodiment of the present invention, Figure 1 shows a diagram of the architecture of the integral passengers and luggage control system that comprises four different parts:
- A central computing platform **11** in charge of the control and management of the whole implied information within the passengers boarding process, including luggage. As an example of application scenario, the central computing platform **11** is connected to at least one airline Departure Control System (DCS).
- At least one passenger and luggage control device **12** that involves a receptacle **20** where a piece of luggage is placed and analyzed **21.** It is also an incoming point for the passenger and a verification point for the boarding pass where, meanwhile, both passenger and boarding pass are analyzed.
- At least one payment terminal **13** that provides means for economic transactions. Once the passenger and/or its luggage have been verified, the payment terminal **13** allows the passenger to satisfy the applicable fees and, eventually, to gain access to determine areas on the basis of the airline policies (usually the aircraft, but also VIP areas, etc.).
- An access management system **14**, centered on controlling the access to areas such as boarding gates, VIP areas, waiting areas, etc. This way, the access management system **14** can be connected to mechanisms allowing the access like automatic doors, turnstiles, etc.

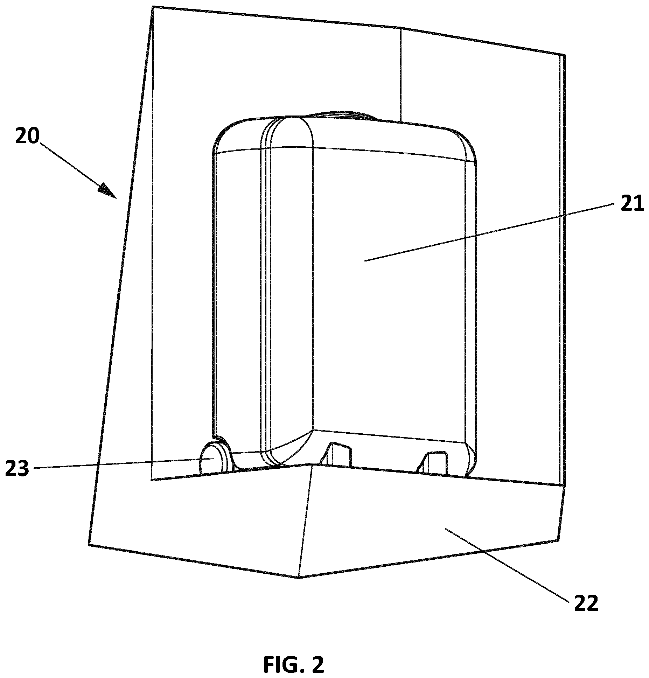

Overall, the integral passengers and luggage control system provides multiple functions among which are:
- Boarding pass verification: the passenger boarding pass is analyzed by means of a scanner or a card reader at the passenger and luggage control device **12**, and checked against the personal identification documents. In the situations where the boarding pass is scanned, it is possible to set different amount of luggage pieces according to the passenger status (economic, business ...).
- The passenger and luggage control device **12** comprises a receptacle **20** (shown in Figure 2) with one or more cameras that take pictures and analyze the luggage **21** of each passenger, comparing the image verification to the airline policy.
- At the incoming passenger point, several procedures can also be performed. Passengers could be photographed in those countries permitted by current legislation. Passenger recognition could be carried out by facial recognition. This way, a camera can read the passenger identification ID (e.g. passport), then, computer vision techniques could be applied to compare the passenger face to the ID document photo. If it does not match, an alarm starts so the passenger can be controlled for the assisting staff or handling agents.
- At the payment terminal **13**, passenger satisfies the necessary fees to agree with the airline policy. In case that system detects a passenger belonging to the frequent flyers program, payment terminal **13** could perform the payment automatically. This way, the passenger needs just to accept the transaction and has no need to stop in the boarding queue. Additionally, payment terminal **13** includes one or more printers in order to, once the fee is satisfied, a receipt of payment is generated.
- It can generate the necessary documentation that the aircraft commander has to sign before the aircraft departure, named cargo manifest. Besides, an alarm to indicate that the cabin is full can also be activated. Labels to identify luggage can be generated too as demand of the airline crew. In this case, the system generates the necessary labels to deliver the luggage to the aircraft hold. Printing the label is preferably done at payment terminal **13**. It exists the possibility of printing a "CABIN APPROVED" label instead of the usual hold label. Improving the technology to measure the remaining space in cabin, the systems allows that, once the available space in cabin is reached, the boarding process does not stop. Conversely, a label is printed for every remaining piece of luggage, no matter the category.
- At the passenger and luggage control device **12**, a classifier is used to determine the type of luggage and, by means of this classification, the systems informs the passenger of the next step that could be: allow the passenger to access the boarding areas through the management access system **14** or previously send the passenger to the payment terminal **13**. By virtue of the boarding pass analysis, the system is capable to indicate to the passenger the boarding queue assigned.
- At the luggage reception point for those luggage pieces meant to be delivered to hold compartment (such as auto drop-off mechanisms), the luggage is stored and properly labeled for the assistant staff of the airline to deliver it to hold.

A major process of this integral passengers and luggage control system relies on the singularities of the luggage analysis performed in the passenger and luggage control device **12**, which go beyond the simple dimensional or weight control that a common electronic component could perform.

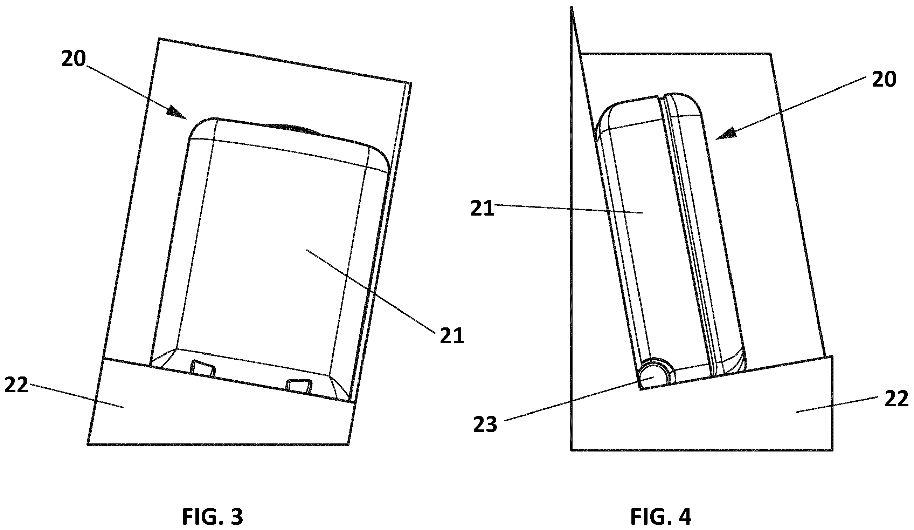

Figure 2 shows the receptacle **20** where a piece of luggage **21** is placed. The receptacle **20** has a base **22** tilted in one or two directions, as shown in Figures 3 and 4, facilitating the piece of luggage **21** to easily lay. The base **22** is supported on a scale which task is two-fold:
- It detects when any weight is placed on and it is stable, so the system can begin with the classification of the piece of luggage.
- It determines the exact weight of the piece of luggage in case that any airline policy needs this measure.

The receptacle **20** also contains one or more sensors **23** for the recognition of the luggage. Sensors **23** are usually cameras used to distinguish the dimension of the piece of luggage by taking and analyzing several pictures.

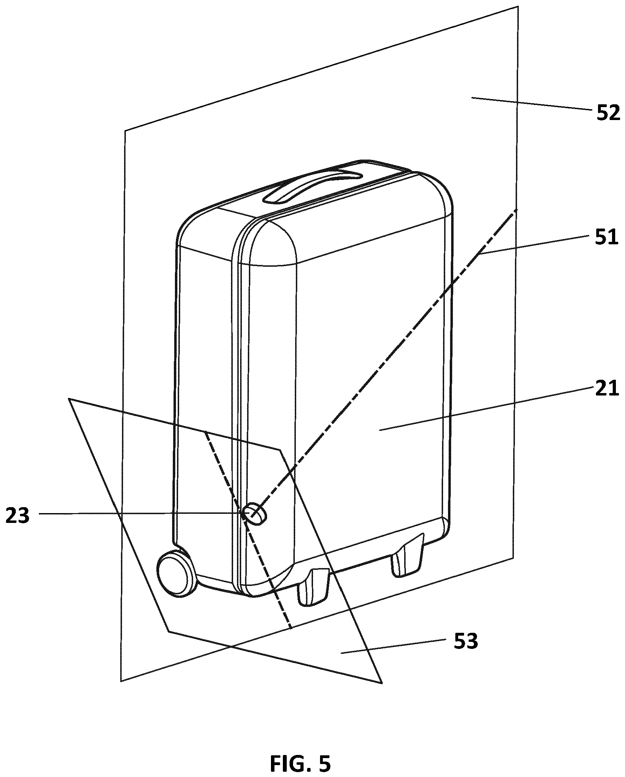

For instance, as Figure 5 shows, let suppose that the direction of a sensor **23** (the main axis) is given by a vector **51**. The placement of the sensor **23** is such that vector **51** is contained in a plane parallel to plane **52** that is at a distance of +-10% approx. of the dimension limit plane **52** that specifies the maximal dimension to be controlled. Moreover, the positioning of the cameras can be arranged as needed.

On the other hand, and due to the fact that the analysis involves a visual supervision (i.e. pictures taken by sensors **23**), the conditions in which these images are meant to be taken should be heterogeneous. Therefore, the volume of the receptacle **20** receiving the piece of luggage **21** is properly illuminated by a light source making the environment conditions for the pictures to be taken as homogenous as possible, independently of the light conditions around the passenger and luggage control device **12**.

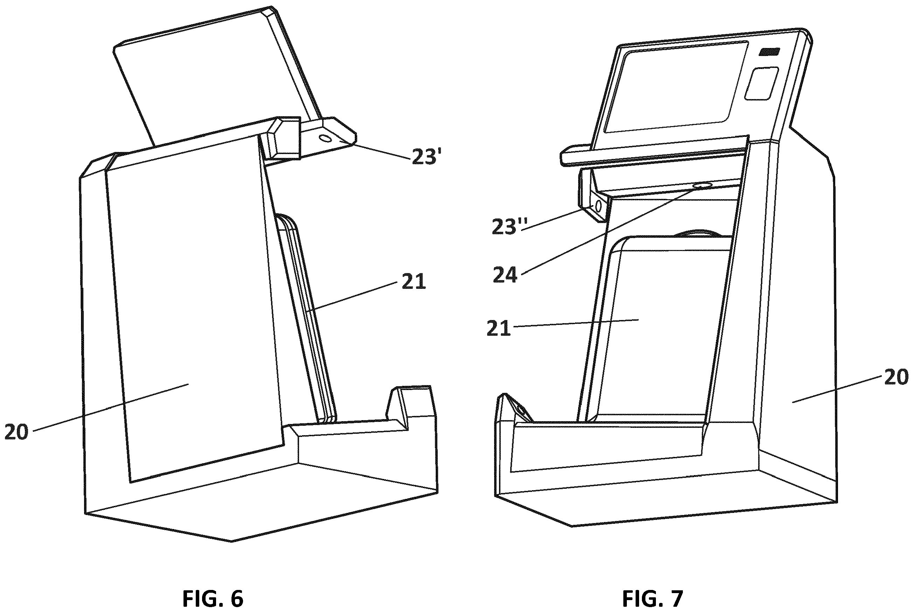

Figures 6 and 7 show a light source **24** installed on the receptacle **20** and other two cameras (sensors **23**', **23**") that are set in receptacle **20** that, along with sensor **23** shown in Figure 5, allow to control the three dimensions of the piece of luggage **21**. Sensor **23** controls depth, sensor **23**' controls height and sensor **23**" controls width dimension.

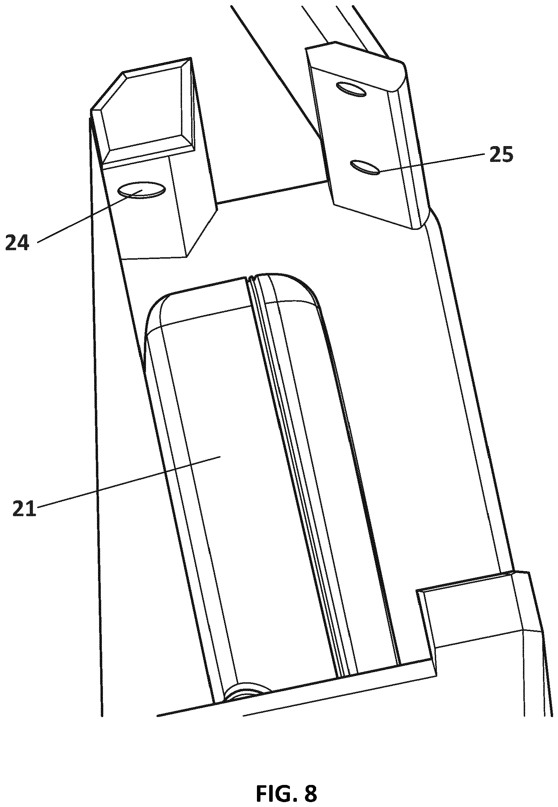

In Figure 8 it is shown that receptacle **20** has an additional sensor **25**, a camera that takes the photo of the piece of luggage **21** for the classifier to determine the category or type of the luggage.

According to an embodiment, the sensor used by the passenger and luggage control device **12** can be implemented in a 3D vision system with one or more 3D cameras **26** (e.g. Intel® RealSense ™ Depth Camera D435) to build a 3D-reconstruction of the piece of luggage **21**. The 3D model can be analyzed and it can offer a result with the classification merging both categories, classifiers (Bayesian ones) and 3D image reconstruction of the piece of luggage **21**.

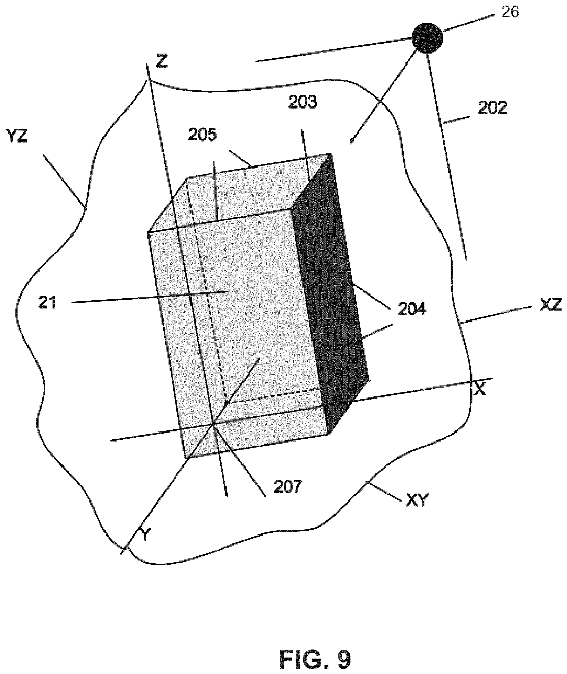

Figure 9 depicts the space volume monitored by the 3D vision system, referenced by a Cartesian coordinate system consisting of three axes (**X**, **Y**, **Z**), a point of origin of the axes (**X**, **Y**, **Z**) and three main planes (**XY**, **XZ**, **YZ**) containing the different planes of the coordinate system.

To make a measurement of an object using a 3D view, the vision system needs to be calibrated to accurately know the distance between any two points of the 3D view captured by the 3D vision system.

**YZ** and **XY** planes of the measurement zone are considered as reference planes when making measurements of the piece of luggage **21**. The reference system is rotated around the **Y** axis following the inclination of the base **22**, so that the piece of luggage **21** is positioned in the measurement zone resting on the **YZ** and **XY** planes.

The field of view 202 of each 3D camera **26**, the maximum size of the piece of luggage **21** to be measured and the size of the receptacle **20** determine the number of 3D cameras to be used.

From the data acquired from the sensors, points, axes and planes are obtained, which will be used as references for the measurement. In Figure 9, the line **203** indicates the union of two planes of interest, parallel to the aforementioned references. The measurement in the Y axis direction, is a measure of the width of the object, using for that measurements of horizontal lines of the field of view **202** at different heights **204** and **205**.

Through the cloud of points acquired from the 3D measurement of the piece of luggage **21**, several measurable variables or parameters can be obtained. A classifier is applied to said parameters using Artificial intelligence, through the application of neural networks, where the inputs are the parameters obtained from the sensors and the output is a luggage category obtained from the classification of the parameters. A deep learning process is previously applied to the neural network, introducing input variables with known output parameters.

Through all these measurements a measure and classification can be obtained by the passenger and luggage control device **12** with great accuracy.

The passenger and luggage control device **12** performs tasks that imply to control a set of conditions concerning a luggage category. Therefore, the passenger and luggage control device **12** checks one by one each specific condition of the airline. These conditions may comprise dimension, weight, ratio weight/volume, color, shape, etc.

As long as a condition or set of conditions are verified, system analyses whether this set constitutes a specific luggage category that cannot be covered by any other category.

In case it is concluded that this set of conditions results in a specific category, the classifying process ends. Otherwise, the system continues the analysis until it finally determines the category of the piece of luggage **21** placed in receptacle **20**.

According to an embodiment, the process performed by the passenger and luggage control device **12** begins with the image capture from at least two sensors **23**. Using this picture, a classifying procedure is run to determine the type of the piece of luggage **21** placed in the receptacle **20**. For instance, if a piece of luggage is a small one (trolley), a laptop sleeve, etc., it is so determined using a set of input parameters within the knowledge previously acquired by the system. This classifying procedure may use repetitive classifiers in a peer review classification that distinguishes different types of pieces of luggage. For instance, it may firstly distinguish trolleys from the remaining options, then small sleeves from the rest, and so on. The order in which each classifier is activated is optimized to improve the classifier's accuracy. Besides, a feedback response can be implemented so that the passenger can manually agree or disagree with the classification. In this way, the classification system may improve by including all these feedback contributions.

Once the type of the piece of luggage **21** is determined, the system analyses each of the airline conditions if necessary. Then, first ones to be taken into account are the size measurements as they establish the seed to decide whether or not to verify any others. For instance, system can control the weight just in the case the piece of luggage **21** exceeds a certain length in any dimension.

Sensors used in receptacle **20** to measure the dimensions of the piece of luggage **21** could be more than one and, also, of different types, e.g. infrared, cameras, ultrasound sensors, etc.

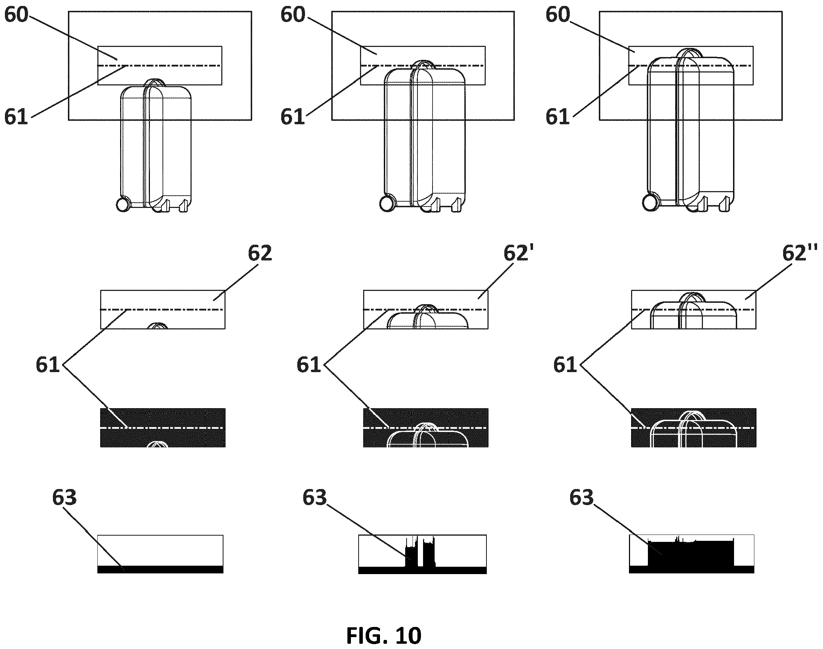

Figure 10 shows examples where the condition to be analyzed is dimensional. In the examples in the left and central columns of Figure 10, height condition holds, while in the examples shown in right column of Figure 10 the same height condition does not hold. A picture from sensor is taken corresponding to the dimension to be controlled. The underlying idea of the dimensional control process is to analyze a particular area of the image, named control area **60**, in order to evaluate whether or not the piece of luggage **21** placed in the receptacle **20** invades that particular area and to what extent. Analyzing how particular areas are invaded or crossed, as shown in Figure 10, the system is able to determine if the piece of luggage **21** agrees with the dimensional condition in that specific direction. The analysis is not based on precision but instead in the decision regarding in which situations or conditions this piece of luggage **21** is considered to be in a category in a real-world scenario within the operating procedure of the airline. By these means, situations where handles, straps, wheels, zippers... can be easily handled. The particular control area **60** represents a region of the image where the piece of luggage **21** would exceed the maximal theoretical dimensions. In order to decide whether this limit is exceeded or not, one or more critical lines **61** inside the control area **60** are defined. The critical lines **61** represent the limits of the maximal dimensions meant to be considered. Image **62**, **62**', **62**" captured in the control area **60** of each case depicted in Figure 10 is analyzed through the critical lines **61** to provide a decision regarding the dimensional condition being analyzed.

Regarding the above mentioned case of implementing a 3D model of the piece of luggage **21**, the system analyses critical areas of the volume instead of using critical lines. The 3D camera **26** allows reproducing the 3D volume, which would be enough to analyze the control volume by three critical planes **XY**, **XZ** and **YZ**.

Each camera or sensor **23** is configured during the setup process of the one or more passenger and luggage control devices **12**, in which the scale cm/pixel is defined for a given resolution e.g. 640x480px. In other words, which pixel is associated to each measure in cm; so changing the cameras resolution requires a reconfiguration. Besides, at least one pixels' reference is configured so the system can rebuild the control area **60** when taking each picture according to the maximal dimensions of the airline.

Consequently, once the picture to analyze a dimension is taken, the first step consists in defining the control area **60** according to the dimensional conditions of the airline. Then, a critical line **61** is defined so that it represents the limit inside the control area which is located to the maximum distance permitted. A critical line **61** is defined for each dimension the system needs to analyze using the same control area **60**. At this point, the control area 60 passes through two filters. The first filter is a line filter to control the edges that returns the lines defining the outline of the whole content of the control area. The second filter is a grey-scale filter that transforms the content within the control area into a grey-scale image.

Hereafter, critical line **61** is analyzed extracting the cut-off points of the lines obtained with the first filter, analyzing their distance and color average from second filter between the cut-off points and the critical line **61**. Once critical line **61** is analyzed, systems extract a value that represents the percentage of piece of luggage that surpasses the critical line **61**. At this point, if a determinate percentage (25-35%, parameter that can be set in the setup of the device) exceeds the critical line **61**, it reveals that the piece of luggage is likely to not agree with the maximal dimension that is being analyzed. If this case happens, a filter is applied to critical line **61**. This filter is responsible for deducing which non-compliant situations of a given condition are due to elements such as handles, straps, wheels, zippers, etc. This corrector filter is based on the analysis of the color distribution **63** of the critical line **61** in such a way that, depending on the color distribution through the critical line **61**, it is decided whether the complaint condition check results have to be reconsidered or not.

Additionally to the dimensional condition analyzed, the passenger and luggage control device **12** is capable to control specific conditions demanded by the passenger transportation company. For instance, if the condition to analyze is weight, system reads that value directly from the scale placed under the receptacle **20**. If the condition to control is the color of the piece of luggage, picture captured from sensor **23** begins to be analyzed for the system to extract the predominant color.

After the decision of whether a condition is satisfied or not, if it is the case that it does not and it is discriminatory, the piece of luggage **21** is directly classified without checking any other condition.

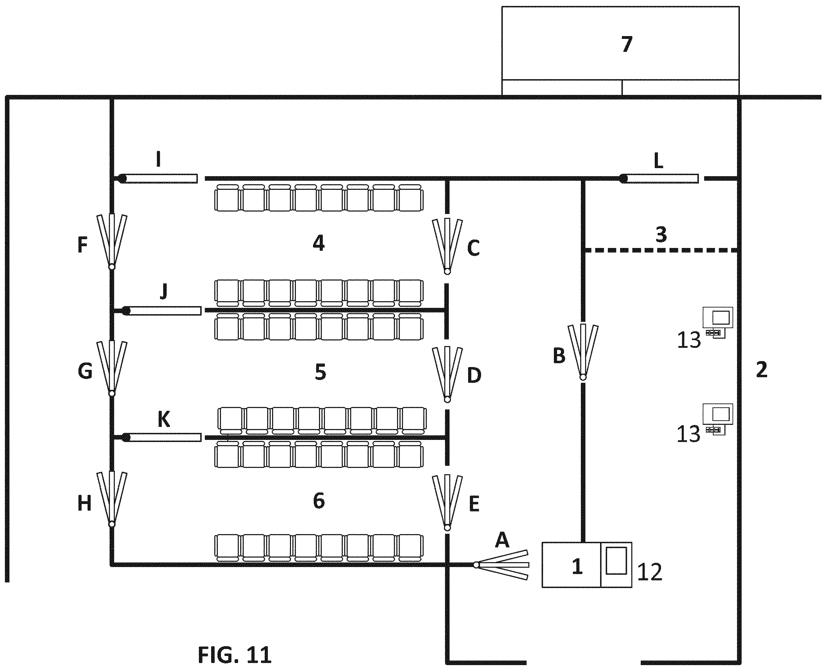

Figure 11 shows an example of an application scenario of the invention where all the steps the passenger goes through are depicted. Firstly, the passenger arrives at a control point 1 where, depending on the passenger status, it is controlled the access to the different boarding areas **4**, **5**, **6** allowing or denying the access by controlling automatic barriers (**A**, **B**, **C**, **D**, **E**, **F**, **G**, **H**) that are controlled by the access management system **14**. These automatic barriers (**A**, **B**, **C**, **D**, **E**, **F**, **G**, **H**) allow or deny the access to the passenger just by reading the boarding pass. Several automatic barriers **F**, **G**, **H** also allow the passenger to access to other common-areas such as toilets and re-enter without visiting again control point **1**.

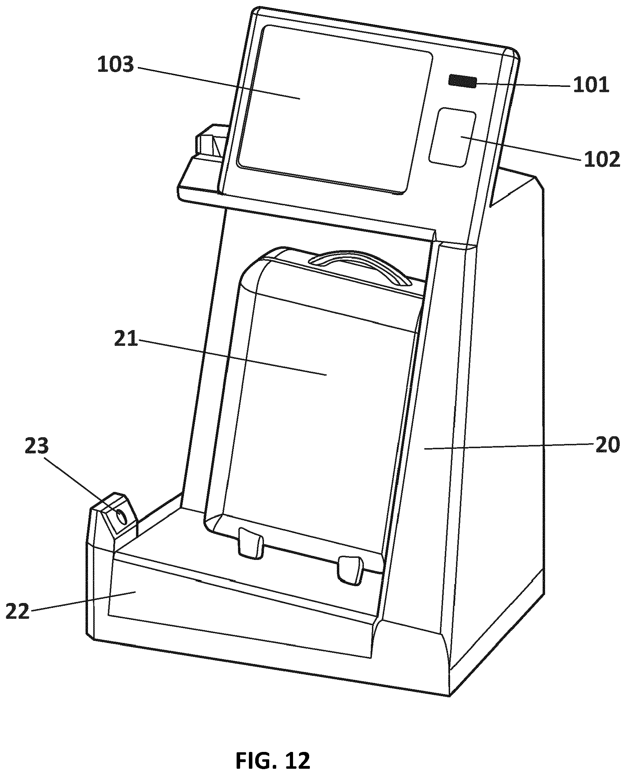

In Figure 12 it is shown, according to an embodiment, the passenger and luggage control device **12** that are placed in control point **1**, counting on a receptacle **20** with at least one sensor **23** to perform the analysis of the piece of luggage **21**, a card reader or boarding pass scanner **101** for reading boarding passes and one or more ID readers or identity scanners **102** for those passengers that scan documents such as passports. Additionally, a screen **103** is provided at the control point **1** to assist the passenger.

Moreover, as shown in Figure 11, the integral passenger and luggage control system counts on one or more payment points **2** for the passenger to satisfy the corresponding fees using a payment terminal **13**, and a drop-off point **3** (or drop-off area) for the piece of luggage **21** to be hold. Alternatively, payments can be charged directly from the passenger and luggage control device **12** using a payment gateway; in other words, a payment terminal **13** may be integrated in a passenger and luggage control device **12** (in this case, payment terminals 13 would be located in control point **1**).The system has as many boarding areas **4**, **5**, **6** as steps needed for the airlines. Pre-boarding areas are located as follows: passengers in boarding area **4** are the ones that will pass first (priority passengers). Next, passenger in boarding area **5** and finally, boarding area 6. Crossing through boarding areas **4**, **5**, **6** is controlled by automatic barriers **I**, **J**, **K**.

A specific passenger carrying no piece of luggage **21** or a small one agreeing the airline conditions arrives at control point **1**. If the passenger carries a piece of luggage **21**, it is placed into receptacle **20** at control point **1**. Thereafter, passenger follows the instructions shown in screen **103**. If the passenger carries no piece of luggage, just the ID documents are requested. In both cases, passenger and luggage control device **12** allows or denies the access to the pre-boarding areas **4**, **5**, **6**. The access is provided by automatic barriers **A** and also by automatic barriers **C**, **D**, **E** that correspond to the assigned pre-boarding area.

Conversely, if any other passenger arrives at control point **1** and after putting the piece of luggage **21** in receptacle **20**, it is determined that the piece of luggage **21** does not agree with the airlines conditions to be placed in cabin, passenger gets the corresponding information in the screen, including fees and instructions to follow. Passenger is instructed to use a payment terminal 13 at the payment point **2**, denying the access through automatic barrier **A**. Therefore, passenger must use a payment terminal **13** at the payment point **2** to satisfy the necessary fees. Once it is done, payment terminal **13** satisfies a payment receipt with the label to be placed on the piece of luggage to send it to hold compartment. This information is sent by the central computing platform **11** (not shown in Figure 11) to the airline system for storing. Once the passenger has the piece of luggage labeled, it must be placed at the drop-off point **3**. In addition, in order to satisfy the fee, system allows the passenger access, by automatic barrier **B**, to the different pre-boarding areas. Therefore, once the fees are satisfied and the piece of luggage has been placed in the drop-off point **3**, passenger accesses through the automatic barrier **B** and automatic barriers **C,D**,**E** to the assigned pre-boarding areas **4**, **5**, **6**.

However, it could be possible that the passenger carries a piece of luggage that must be checked-in but this passenger has already satisfied the fee and, therefore, passenger must not pay at payment point **2**. In this case, passenger has just to go to payment point **2** to print the label for the piece of luggage **21** and place it at drop-off point **3**. Once the label is printed in payment point **2**, passenger will be allowed to access the pre-boarding areas by automatic barrier **B**.

Payment terminal **13** requests the passenger to scan the boarding pass. Once the boarding pass is scanned, it checks into the central computing platform **11** of the corresponding system. Payment point **2** has available all the payment methods needed such as credit cards, cash, contactless, etc. Once the passenger satisfies the corresponding fees, payment point **2** sends the update to the passenger profile indicating that all payments are concluded. Furthermore, payment point **2** can allow the passenger to pay for additional services that the airline offers and are not included in the passenger pass such as VIP areas access, priority, etc. This way, a passenger with no fee to be satisfied can also visit payment points **2** in order to request some of the mentioned extra services (VIP access, priority, etc).

When the boarding process starts, as it can be seen in Figure 11, boarding area **4** is the first to access the airplane. Hence, the access management system **14** opens, in first place, the remote opening door **I**, which only allows the passengers in the boarding area **4** to access to the boarding gate **7**. Once the boarding of the second boarding area **5** is decided, the access management system **14** opens remotely the access door **J**, which allows passengers of the area **5** to access to the boarding gate **7**. As the access gate **I** is still open, the pass is allowed as well. And so on, so the boarding will be allowed to whichever areas are enabled. Once the passengers boarding is concluded, the access management system **14** opens gate **L** to allow handling staff to take every piece of luggage **21** that have to be checked-in and have been dropped in the corresponding drop-off point **3**, without affecting to the passengers boarding process, so the time spent gets minimized.

On the other hand, before the system is able to start the integral passengers and luggage control, it must be set up by a user or handling agent, in order to define the devices operational mode. The entire set up process, described in a simplified way, is the following:
- The first step in the setup process is to grant access to the control devices using user/password identification. This user/password univocally identifies the access from a certain airline or group of airlines at a certain airport or group of airports, boarding gate, etc. In this way, the system loads the information needed for its proper operation from the central computing platform **11**, such as: list of flights for each airline, list of categories and conditions for each airline luggage policy, etc. One of the advantages of this process is the way the airline luggage policy information is managed. In particular, each airline is able to define or set a list of conditions or characteristics for each luggage category that wants to take into account in the luggage control process. This characteristics or conditions can be: luggage type (e.g. suitcase, laptop, backpack, clothes), dimensional conditions, tolerances for each dimensional condition (proportional or absolute), color, weight, weight/size ratio, etc. Moreover, the airline can decide if each condition is selective to apply particular decisions, or can be combined with other conditions in order to define particular process outputs or conditions to apply (for example, an airline can decide that the weight will only be a selective factor if combined with a positive dimensions control). For each of the defined categories, the airline defines an output information or a series of boarding conditions, such as "Cabin Approved" tag printing, IATA Check-in tag printing, ancillary fees to be fulfilled, etc., or a combination thereof. This way, all casuistry when analyzing the heterogeneity of luggage spectrum is represented, allowing different airlines to adapt their luggage conditions to each moment and for any particular situation.
- Thereafter, in order to begin the process, the flight for which the boarding is about to start is selected from a list of pre-loaded flights; or alternatively it must be indicated that the device has been placed at a public common area not corresponding to any particular boarding gate (public areas, security controls, etc.). These different scenarios or operational modes determine certain system functionalities during the control process, so that it is effective and practical for both airlines and passengers. For example, at common areas it allows the passenger to select the airline amongst a list of preloaded airlines. This selection adapts the passenger and luggage control process to the group of categories and luggage conditions of the selected airline.
- Additionally, the system allows the set up of certain process functionalities, such as sound alarms for each situation, "Cabin Approved" tag printing options, Boarding pass scanning request, etc.
- The system set up is centrally stored in the central computing platform **11**, so that all the devices can be configured or set up remotely if desired.

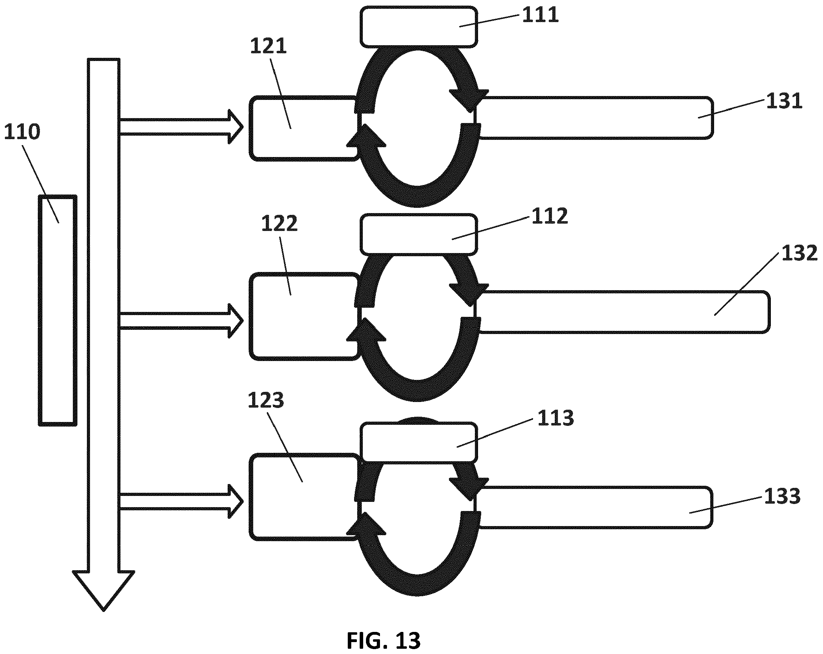

It is worth mentioning the singularity of the real time information update process to the central computing platform **11**, to the databases, to the photographs storage and the airlines DCS communications. The singularity of this process resides in the fact that, if data, photographs, registries, etc. are uploaded or sent inside the same passenger and luggage control process, the total control time would slow down the boarding process too much, and hence the total boarding time would be negatively affected. For this, in at least one system embodiment, an asynchronous information update process has been implemented, as shown in Figure 13. This process determines the type of information to be uploaded (such as, for example, database registries, photographs, XML objects for the Airlines DCSs, etc.) and opens an asynchronous work thread **111**, **112**, **113** for each of these information types. In this way, several parallel data upload processes are established, and they are in continuous operation during the entire boarding period or use of the device. In at least one embodiment, these asynchronous processes work the following way:

Instead of being the passenger and luggage control process **110** the one sending or uploading the information directly, information or data to be uploaded is stored in a local intermediate "buffer" **121**, **122**, **123**. For example, luggage or passengers photographs to be uploaded are stored in a local intermediate "buffer" **121** which, in this case, is a folder inside the hard drive of the control unit. Passenger registries and DCS registries are also stored in their respective local "buffers" **122** and **123**. Additionally, each of the asynchronous threads **111**, **112**, **113**, is permanently consulting the content of cited local intermediate buffers **121**, **122**, **123** (each thread to its corresponding buffer), and if they find information stored inside the buffer, they will proceed with its upload or delivery **131**, **132**, **133** to where it is assigned (database, ftp server, airline DCS, etc.), following a First In First Out (FIFO) structure that keeps the order in which information was generated.

In this way, when the passenger and luggage control process **110** begins, and once the device working mode has been defined as previously explained, a series of asynchronous work threads **111**, **112**, **113** are opened in order to upload the generated information or data without slowing down the whole process. The passenger and luggage control process **110** allows two different situations:
A) If the passenger is travelling without luggage, and also the device is configured to request the boarding pass to all passengers (devices placed at common public areas do not request it), the access control consists only on scanning the passenger boarding pass, giving as a result a passenger boarding registry without luggage, which is sent, uploaded or shared to the Airline DCS. From this boarding pass scan, performed by the boarding pass scanner **101**, the device control unit receives, parses and analyzes the information contained inside the boarding pass, and eventually generates the information to be sent where needed (for example, to the DCS and the central computing platform **11**). Moreover, if the passenger identification control is enabled, the passenger must scan his identification using the identity scanner **102**, as well as positioning himself to be photographed in order to analyze and determine the coincidence and validity of the identification document. If this identification offers a negative result, a sound and/or visual alarm can be emitted and the assistance of handling personnel is requested. In case of a positive match, the process can continue and the passenger registry will allow his access or entrance to where the airline decides (certain areas inside the boarding zone, for example).
B) On the other hand, if the passenger is travelling with luggage, luggage must be placed in the receptacle **20** of the passenger and luggage control device **12**. Once the passenger and luggage control device **12** detects that the weight is stable through a load cell placed in the base **22** or lower part of the receptacle **20** (this means that the piece of luggage is not moving and the passenger is not touching it), it proceeds with the luggage analysis. This analysis checks if the characteristics and conditions corresponding to the type of analyzed luggage **21** are met. Once all the conditions and the type of luggage is determined, the luggage **21** is classified in any of the categories that the airline has parameterized or determined, showing said information to the passenger on the screen **103**.

In the luggage analysis, sensors can measure contour, surface textures and/or luggage shapes. The type of baggage is detected using an artificial intelligence algorithm. Using the surface and contour measurements of the luggage, statistical parameters are obtained. Depending on these parameters the type of luggage can be classified, for instance as rigid troller, soft troller, sport bag, laptop suitcase, soft bag, backpack, bag, or instrument bag. According to this classification and the luggage dimensions, luggage can be assigned as a hand luggage item or an accessory.

For example, when comparing a sport bag with a laptop suitcase, the upper surface of the sport bag tends to be cylindrical and elongated, whereas a laptop case is elongated and narrow and with a height somewhat larger than a sport bag and usually with a handle that can be found in the upper zone. When comparing a rigid troller with respect to a soft troller, the surfaces of the upper area with the handle are similar, but in the area of the depth measurement the rigid troller has very little curvature with respect to the soft troller, which tends more to a spherical surface.

In this moment, if the boarding pass scanning is active, it is requested to the passenger independently of the luggage category. If it is not active, the boarding pass is only requested if the analyzed luggage category requires some information contained inside the boarding pass (for example, in order to print the luggage tag to check-in the luggage, if necessary). Once the passenger information is scanned from the boarding pass, it is registered in the corresponding local buffer **122**, **123** in order to be uploaded to the passenger registry **132**, the airline DCS **133**, etc. In case of not needing the boarding pass scanning, the passenger is told to extract the piece of luggage **21** (and to place a new piece of luggage inside the receptacle **20**, if he had an extra one). The passenger and luggage check registries are sent to the buffers to be uploaded when the luggage is retrieved in order to avoid duplicated registries in case of repeating the luggage check.

In other embodiment for the present invention, the order for the steps of first insert luggage and then scan boarding pass can bereversed, such that the passenger boarding pass is first scanned and, once the passenger is identified, at least one piece of luggage **21** is analyzed, associating the analyzed luggage to the passenger whose boarding pass has just been scanned.

After that, optionally, if the control device has activated tag printing (for example, "cabin approved tag" or numbered tag to check-in the luggage), the printing routines are set off. In particular, in case of numbered bag tag printing, these must be printed following the IATA standard containing an independent consecutive numbering for each airline involved. Depending on each airline operational processes, the central computing platform **11** can both consult the airline computer system and receive the numbering to be printed, or generate its own independent consecutive numbering for each airline. It would be possible that the IATA tag printing would not be performed at the control point **1** itself, but at the payment point **2** instead, after having fulfilled the pending payments, if any. Next, if the detected luggage category leads to some sort of fee payment, this information is shown on the screen **103**, along with the luggage category and the airline luggage policy, indicating the passenger how to proceed (for example, indicating that the passenger must walk to a payment point **2**). Additionally, if the airline had implemented any sort of remote or pre-accepted payment method using the passenger credit card data that could have been gathered or requested previously (for example, during the online check-in process), an "Accept Charge" button is shown on the screen **103** so that the passenger only needs to press it and explicitly accept the charge of the mentioned pending payment in his credit card. This is an important detail since asking for explicit authorization for a money charge on a credit card is a legal imperative, even if the company had the credit card info from a previous process. Once the payment is consolidated and the passenger has retrieved the printed tag for the luggage (if any), the passenger is indicated to retrieve his piece of luggage **21** from the control device receptacle **20**, and to place a new piece of luggage **21**, if any. Once the piece of luggage **21** is retrieved, all related data and information belonging to the passenger and luggage is then sent to the local buffers **121**, **122**, **123** in order to be uploaded following the process mentioned above.

In this moment, the passenger and luggage control device **12** goes back to the beginning of the passenger and luggage control process **110** to proceed with the next passenger.

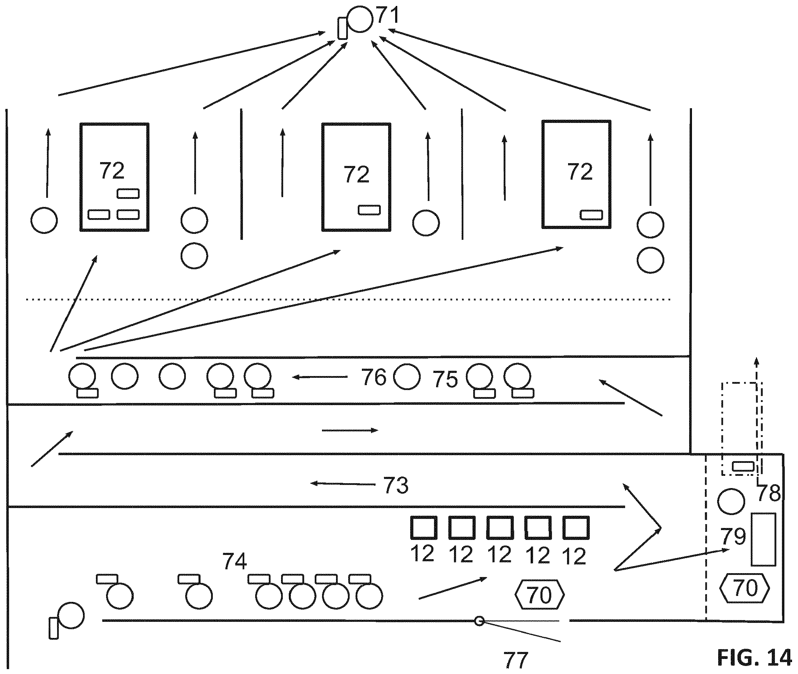

The present invention is useful for the whole airport facility, and not only in those areas close to the boarding. Figure 14 shows the area prior to airport security zone 72. The passenger 74 with hand luggage 21 arrives at the entrance area of the airport security zone 72, first finding the passenger and luggage control devices 12 and, optionally, airport or airline staff 70 that will help in the whole process (in some airports staff 70 may be not necessary, the process being handled by the user himself as a self-service). Once the piece of luggage 21 is analyzed in the receptacle 20, if it is in conformity the passenger and luggage control device 12 prints a label (e.g. "CABIN APPROVED"), the label is placed in the piece of luggage 21 and the passanger will go on through the row zone 73. If the piece of luggage 21 is not in accordance with the airport or airline policy, the passenger and luggage control device 12 prints a label (e.g. "BAG TAG") to be able to send that piece of luggage 21 to the hold of the plane, and depending on the fee applied on the luggage the passenger will need to go to a payment terminal (e.g. ticket counter or desk 79) to pay the fee and then place the luggage in the drop-off 78 to send the piece of luggage 21 in a controlled manner in the same way as all checked baggage. In the queue before the airport security zone 72, there will be passengers 76 who will not have luggage (because they did not bring luggage or had to leave it at the droff-off) and other passengers 75 with a piece of luggage 21 because the analysis of the luggage was correct and it was classified as hand luggage or accessory. Finally, passengers will pass through the airport security zone 72 where the passengers, their clothes and luggage will be thoroughly analyzed. For this reason, the more suitcases go to the drop-off (for not being allowed by the luggage policy of the airline or airport), the lower the volume to be analyzed in the security zone.

The passenger and luggage control devices 12 of the present invention may also take into account the maximum allowable volume of luggage in the cabin of the airplane. Since the passenger and luggage control devices 12 analyzes all the luggage, it knows the total volume of the luggage that has been so far admitted in cabin (as hand luggage or accessory). When the total volume admitted exceeds the maximum allowable volume, the passenger and luggage control device 12 can decide not to admit more luggage as hand luggage or accessory for lack of space in the cabin. In this case, the passenger and luggage control device 12 will print a bag tag to send the piece of luggage 21 to the drop-off, normally without having to pay a fee. This way, the correct luggage volume arrives at the gate queue so that there are no incidents in the boarding or inside the plane due to lack of space. Besides, the staff will not have to make any type of manual label to the suitcases that they stay for storage due to lack of space, improving the operation of the airport.

## Claims

1. A system for controlling passengers and luggage before boarding, comprising:
- at least one passenger and luggage control device (12) with processing means, positioned at a control point (1) accessible by at least one passenger, comprising means for identifying a passenger and a receptacle (20) configured to receive and analyze a piece of luggage (21) of the passenger, the receptacle (20) comprising at least one sensor (23, 23', 23", 25, 26) for capturing at least one luggage parameter used for determining a luggage category; wherein the luggage category is determined by a classifier that runs in the processing means and is compared to at least one luggage condition;
- at least one payment terminal (13) where the passenger, if the comparison between the luggage category and the at least one luggage condition leads to a pending payment, can fulfill the pending payment;
- an access management system (14) configured to allow or deny the passenger entrance to at least one area (4, 5, 6) based on the comparison between the luggage category and the at least one luggage condition and, if said comparison leads to a pending payment, based on the fulfillment of the pending payment; and
- a central computing platform (11) connected to the at least one passenger and luggage control device (12), the at least one payment terminal (13) and the access management system (14), and configured to centralize information related to passenger and luggage control.

2. The system of claim 1, wherein the classifier is based on neural networks, where the input is the at least one luggage parameter and the output is the luggage category.

3. The system of any preceding claim, wherein the at least one luggage condition comprises a luggage type condition.

4. The system of any preceding claim, wherein the at least one luggage condition comprises any of the following conditions: one or more dimensional conditions, one or more weight conditions, one or more weight/volume ratio conditions, one or more color conditions, or a combination thereof.

5. The system of any preceding claim, wherein the at least one sensor of the receptacle (20) comprises a 3D vision system (26) configured to build a 3D-reconstruction of the at least one piece of luggage (21).

6. The system of any preceding claim, wherein the processing means of the at least one passenger and luggage control device (12) is configured to open a plurality of asynchronous work threads (111, 112, 113) to send data and information regarding passenger and luggage control to the central computing platform (11).

7. The system of any preceding claim, wherein the means for identifying a passenger comprises at least one scanner (101, 102) for scanning a passenger document to identify a passenger.

8. The system of any preceding claim, wherein the receptacle (20) has an inclined base (22) in relation to a horizontal plane, and comprises at least one weight sensor.

9. The system of any preceding claim, wherein the at least one passenger and luggage control device (12) is configured to activate printing of a luggage tag based on the luggage category, and
wherein the system further comprises at least one printer configured to print the luggage tag once activated.

10. The system according to any preceding claim, further comprising a drop-off point (3) prepared to receive the tagged piece of luggage (21) for its delivery to the airplane hold.

11. The system of any preceding claim, wherein the central computing platform (11) is connected to at least one airline Departure Control System (DCS).

12. The system of any preceding claim, wherein the luggage category determined by the classifier of each passenger and luggage control device (12) comprises hand-luggage and/or accessory.

13. The system of claim 12, wherein the central computing platform (11) is configured to:
monitor, for each flight, an accumulated total volume of the hand-luggage and/or accessory accepted in cabin of the corresponding flight by the at least one passenger and luggage control device (12);
compare said accumulated total volume with a maximum allowable volume in cabin for the corresponding flight; and
if the accumulated total volume exceeds the maximum allowable volume in cabin, send an instruction to the at least one passenger and luggage control device (12) to classify each further piece of luggage (21) to be delivered to a drop-off point (3).

14. A method of controlling passengers and luggage before boarding, comprising:
- identifying a passenger at a control point (1);
- placing, in a receptacle (20) positioned at the control point (1), at least one piece of luggage (21) of the passenger;
- analyzing each piece of luggage (21) using at least one sensor (23, 23', 23", 25, 26) to capture at least one luggage parameter for each piece of luggage (21);
- determining, by a classifier using the at least one luggage parameter as input, a luggage category for each piece of luggage (21);
- comparing the luggage category to at least one luggage condition;
- determining if a pending payment is due based on the comparison between the luggage category and the at least one luggage condition, and in that case fulfilling, by the passenger, the pending payment at a payment terminal (13);
- controlling automatic barriers (A, B, C, D, E, F, G, H) to allow or deny the passenger entrance to at least one area (4, 5, 6) based on the comparison between the luggage category and the at least one luggage condition and, if said comparison leads to a pending payment, based on the fulfillment of the pending payment.

15. The method of claim 14, wherein the step of identifying a passenger comprises scanning a passenger document.
